Europäisches Patentamt

(19) European Patent Office

Office européen des brevets

(11) Numéro de publication : **0 306 378 B1**

(12) **FASCICULE DE BREVET EUROPEEN**

(45) Date de publication du fascicule du brevet :
17.04.91 Bulletin 91/16

(51) Int. Cl.⁵ : **B60S 1/52, B60S 1/60**

(21) Numéro de dépôt : 88402039.7

(22) Date de dépôt : 04.08.88

(54) **Dispositif pour laver la glace d'un projecteur, notamment pour véhicule automobile.**

(30) Priorité : 06.08.87 FR 8711204

(43) Date de publication de la demande :
08.03.89 Bulletin 89/10

(45) Mention de la délivrance du brevet :
17.04.91 Bulletin 91/16

(84) Etats contractants désignés :
**DE ES GB IT SE**

(56) Documents cités :
**DE-A- 2 600 379
DE-A- 3 047 396
DE-A- 3 728 508
FR-A- 2 345 219
GB-A- 2 026 851**

(73) Titulaire : **VALEO VISION**
**17, rue Henri Gautier**
**F-93012 Bobigny Cédex (FR)**

(72) Inventeur : **Leleve, Joel**
**7, Villa René**
**F-93800 Epinay sur Seine (FR)**

(74) Mandataire : **Schrimpf, Robert et al**
**Cabinet Regimbeau 26, Avenue Kléber**
**F-75116 Paris (FR)**

## Description

La présente invention a trait d'une façon générale aux dispositifs de lavage par projection de liquide pour des glaces de fermeture, ou analogues, de projecteurs de véhicules automobiles. Elle concerne plus particulièrement un dispositif lave-glace comprenant un réservoir de liquide de lavage, un gicleur ayant un orifice dirigé vers la glace, et une pompe montée entre le réservoir et le gicleur et commandée par un dispositif de commande.

Il est déjà connu, par exemple par le Brevet Français n° 2 372 057, des dispositifs dont le gicleur est conçu pour émettre un brouillard de fines gouttelettes de liquide, suivant un cône ou analogue dont la géométrie est telle qu'il couvre à tout instant l'intégralité de la surface de la glace à laver.

De telles fines gouttelettes ont, pour un débit donné, une efficacité de lavage très limitée : si les souillures présentes sur la glace à laver sont correctement dissoutes par le liquide, elles sont en revanche très mal évacuées. En outre, un tel brouillard de gouttelettes, dans sa forme géométrique, est très sensible aux variations de vitesses du véhicule, si bien que les contours du cône correspondent rarement exactement à ceux de la glace.

On connaît également des dispositifs effectuant un balayage de la surface à nettoyer.

Par exemple, dans le Brevet Français n° 2 222 856, le gicleur est conçu pour donner naissance en son sein à divers phénomènes hydrodynamiques qui conduisent soit à une modification de la section transversale du jet, soit à une modification de sa direction de sortie, auquel cas il peut couvrir la surface à laver selon un parcours sinueux ou en spirale. Mais un tel dispositif nécessite un gicleur d'une grande complexité, et donc coûteux à réaliser et ne permet pas d'obtenir une bonne uniformité de l'énergie cinétique d'impact du liquide sur toute l'étendue de la glace.

On connaît enfin, par le Brevet Français n° 2 345 219, un gicleur susceptible d'engendrer un jet de liquide lamelliforme horizontal. Par un phénomène de turbulence oscillante dans une chambre intérieure du gicleur, on obtient à la sortie de celui-ci un balayage de la lame de liquide sur toute la hauteur de la glace du projecteur.

Ce type de dispositif est désavantageux en ce que la manière dont l'effet de balayage est obtenu est incompatible avec l'obtention d'une répartition homogène de l'énergie de lavage dans le sens de la largeur de la glace. Plus précisément, la conformation donnée à l'orifice de sortie du gicleur n'offre la répartition souhaitée qu'approximativement et globalement, et non pas pour chaque hauteur de la lame d'eau.

En outre, le phénomène de turbulence créé dans le gicleur pour effectuer le balayage est le lieu d'une perte d'énergie dans le liquide en mouvement, qui contribue, pour un volume de liquide donné, à diminuer l'efficacité du lavage.

La présente invention vise à pallier les inconvénients de la technique antérieure et à proposer un dispositif lave-glace dans lequel les moyens pour obtenir un effet de balayage de la lame d'eau donnent à ce balayage une action de nettoyage plus efficace. Un objet subsidiaire de l'invention est de fournir une quantité de liquide essentiellement uniforme à l'intégralité de la surface de la glace à laver.

A cet effet, la présente invention concerne un dispositif pour laver la glace d'un projecteur, notamment d'un véhicule automobile, du type comprenant un réservoir de liquide de lavage, un gicleur dirigé vers la glace, une pompe disposée entre le réservoir et le gicleur, et un moyen de commande de la pompe pour provoquer l'aspiration de liquide de lavage depuis le réservoir et son refoulement vers le gicleur, pour ainsi créer un jet de liquide de lavage heurtant la glace, caractérisé en ce que l'ouverture de sortie du gicleur est conformée pour délivrer un jet de liquide en forme de lame de section essentiellement horizontale couvrant toute la largeur de la glace, et en ce que la pompe et son moyen de commande sont conçus pour faire varier la pression du liquide à l'entrée du gicleur, de telle sorte que le jet, par le jeu de sa vitesse initiale qui varie et de la force de gravité, effectue un mouvement de balayage de la glace dans le sens de sa hauteur.

Des aménagements préférés du dispositif de l'invention sont les suivants.

Pour atteindre un effet de lavage essentiellement uniforme sur toute la largeur du jet en forme de lame, ce dernier présente, dans une direction déterminée, une hauteur d'autant plus grande que la glace est éloignée du gicleur dans cette direction et inclinée par rapport à cette direction.

La hauteur de l'ouverture de sortie du gicleur détermine l'épaisseur du jet dans chaque direction et ladite ouverture présente une forme allongée horizontalement, avec une hauteur maximale à ses bords et minimale en son centre.

La pompe est une pompe centrifuge entraînée par un moteur électrique à courant continu, la pression de sortie de la pompe étant essentiellement proportionnelle à l'intensité du courant qui traverse le moteur.

Le moyen de commande est un circuit de commande en tension engendrant dans le moteur électrique une succession d'impulsions de courant.

Chaque impulsion présente un front montant, un palier et un front descendant, les fronts étant relativement raides.

Chaque impulsion a une durée de l'ordre de 0,2 à 1 seconde.

Deux impulsions successives sont séparées par une durée de l'ordre de 2 à 4 secondes.

Un cycle de lavage comprend de 1 à 5 impulsions de courant, qui déterminent un nombre identique de balayages de la glace par le jet de liquide en forme de lame.

Un cycle de lavage de la glace est déclenché simultanément avec un cycle de lavage du pare-brise du véhicule.

D'autres aspects et avantages de la présente invention apparaîtront mieux à la lecture de la description détaillée suivante d'un mode de réalisation préféré de celle-ci, donnée à titre d'exemple et faite en référence aux dessins annexés, sur lesquels :

• la figure 1 est une vue d'ensemble schématique d'un dispositif lave-glace conforme à la présente invention ;

• la figure 2 est une vue de détail en perspective du gicleur, de la glace, et de la géométrie du jet de liquide de lavage ;

• la figure 3 est une vue de face du gicleur de la figure 2 ;

• la figure 4 est une vue en coupe horizontale axiale du gicleur de la figure 3 ;

• la figure 5 est une vue en coupe verticale axiale du gicleur des figures 3 et 4 ;

• la figure 6 est une vue de détail illustrant la géométrie du gicleur ;

• la figure 7 illustre une géométrie variante du gicleur ; et

• la figure 8 est un diagramme pression/temps illustrant la temporisation de la commande du dispositif.

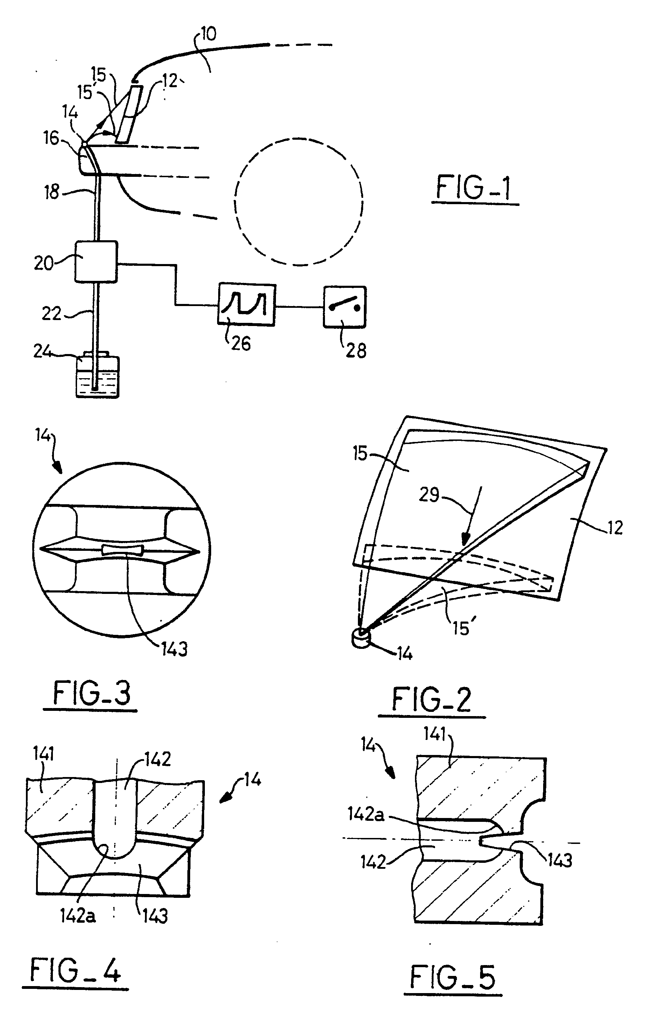

On a représenté sur la figure 1 un dispositif lave-glace qui comprend un réservoir 24 pour un liquide de lavage, par exemple de l'eau contenant un détergent, une pompe 20 dont l'admission est reliée au réservoir 24 par un conduit 22, un gicleur 14 qui est alimenté par la sortie de refoulement de la pompe à travers un conduit 18, ainsi qu'un dispositif pour la commande électrique, calibrée en temps, de la pompe, désigné globalement par la référence 26, qui est assujetti à un interrupteur de commande 28 apte à être manoeuvré par le conducteur du véhicule.

Dans le présent exemple, le gicleur est disposé en avant et en dessous de la glace 12 d'un projecteur avant d'un véhicule automobile 10, et est de préférence incorporé au bouclier ou pare-chocs avant dudit véhicule, désigné par la référence 16.

La pompe 20 est une pompe centrifuge de type classique, qui ne sera pas décrite en détail ici, entraînée par un moteur à courant continu.

L'interrupteur 28 qui détermine l'action de lavage peut être confondu avec l'interrupteur, associé à la commande d'essuie-glaces du pare-brise du véhicule, qui détermine l'envoi d'un jet de liquide vers ledit pare-brise. De la sorte, la manoeuvre de cet interrupteur unique provoque dans le même temps la projection de liquide de lavage vers le pare-brise et vers les glaces des projecteurs.

Le dispositif de commande 26, par l'intermédiaire duquel le moteur à courant continu de la pompe 20 est alimenté, est un circuit de commande en tension dudit moteur selon un cadencement déterminé, déclenché par l'interrupteur 28, comme on le verra plus loin.

Comme on peut le voir sur les figures 3 à 6, le gicleur 14 comprend un corps cylindrique 141 traversé par un alésage axial 142. A l'extrémité de sortie du gicleur, l'alésage 142 se termine par une paroi hémisphérique 142a et débouche dans un orifice ou ouverture de sortie 143.

L'ouverture 143 présente une forme aplatie, avec une largeur sensiblement égale à celle de l'alésage 142 et une hauteur bien inférieure. Comme on va le voir en détail ci-dessous, le profil de l'ouverture est bien déterminé, en s'évasant latéralement vers l'extérieur.

On considérera la géométrie du gicleur tel qu'illustré par les trois vues des figures 3, 4, 5 comme incluse dans la présente description.

En référence maintenant à la figure 2, on a représenté en 15 et 15' des jets lamelliformes de liquide qui sont engendrés par le gicleur 14 décrit ci-dessus, lorsqu'il est alimenté en liquide sous pression.

Comme on peut l'observer, chaque jet présente la forme d'un éventail de section droite horizontale, et, conformément à la présente invention, a pour caractéristique de présenter une hauteur de lame plus grande dans la région de ses bords qu'en son centre.

On a constaté en effet que l'emploi d'un jet lamelliforme de section uniforme, connu dans la technique antérieure, conduisait à un lavage moins efficace des bords latéraux de la glace. En effet, ces zones sont d'une part, plus éloignées du gicleur, et donc la vitesse du liquide heurtant ces zones est en principe plus faible qu'au centre, mais surtout, ces zones présentent une inclinaison substantielle par rapport à la direction du liquide.

Plus précisément, alors qu'une zone centrale de la glace est essentiellement perpendiculaire à la direction du jet à cet endroit, et donc que la section considérée du jet s'applique à une zone de la glace dont la surface est approximativement égale à cette section, une zone latérale de la glace est en revanche relativement inclinée par rapport au plan perpendiculaire à la direction du jet, et donc une quantité de liquide donnée va devoir effectuer le lavage d'une zone comparativement plus grande.

En superposition avec ce phénomène, il se trouve également que les régions de bordure de la glace sont plus éloignées du gicleur que sa région centrale. Il s'ensuit ici encore qu'une même quantité d'eau dans un angle déterminé à la sortie du gicleur va devoir effectuer le lavage d'une zone dont la superficie s'accroît avec la distance.

Ainsi, conformément à une possibilité de l'invention, et comme on l'a indiqué plus haut, le gicleur est conçu pour éjecter des quantités d'eau supérieures vers les bords de la glace.

Dans la réalisation des figures 3 à 6, l'ouverture 143 du gicleur présente à cet effet un profil délimité par des faces supérieure et inférieure, respectivement 144 et 145, qui sont convexes et qui ont dans le présent exemple un profil circulaire de rayon R.

D'une façon générale, ce profil sera adapté à la configuration géométrique du gicleur et de la glace. En particulier, la mesure dans laquelle l'ouverture 143 s'élargit vers les côtés est déterminée par le rapport entre la largeur de la glace du projecteur et la distance du gicleur en avant de ladite glace.

Bien entendu, le caractère plus ou moins bombé de la glace peut également entrer en jeu.

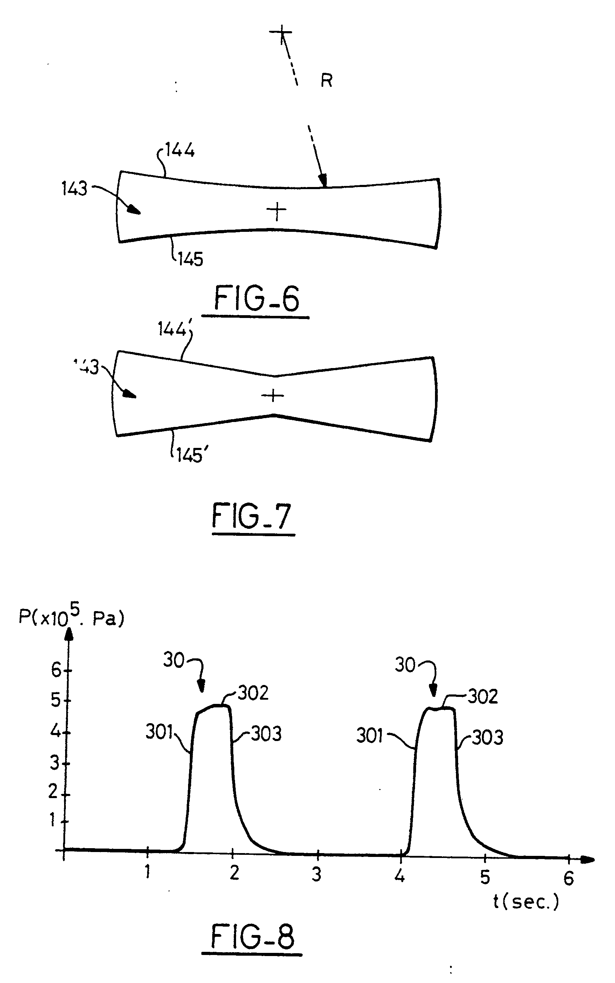

On a représenté sur la figure 7 une variante d'exécution de l'ouverture 143 du gicleur. Le profil des faces supérieure et inférieure 144', 145' de l'ouverture est défini ici par deux segments de droite en V se rejoignant en son milieu, comme représenté.

De même que dans la réalisation de la figure 6, les pentes des segments de droite par rapport à l'horizontale seront déterminées par la configuration géométrique de l'ensemble gicleur/glace du projecteur.

Conformément à l'invention, la pompe centrifuge 20, associée à un moteur à courant continu, est commandée par l'unité de commande 26 de manière à délivrer à sa sortie des impulsions de pression. En outre, dans chaque impulsion, il existe une phase pendant laquelle la pression varie. Cette variation de pression entraîne une variation de la vitesse initiale du jet en forme de lame, et par un choix judicieux des vitesses initiales minimale et maximale combiné à l'intervention de la force de gravité sur la lame d'eau, on amène ladite lame à décrire un mouvement de balayage vertical de la glace 12 du projecteur. Sur la figure 2, on a représenté le jet 15 correspondant à la pression et à la vitesse initiale maximale ; du fait de cette vitesse élevée, l'influence de la force de gravité est faible et le jet de liquide rencontre la région du bord supérieur de la glace. Le jet indiqué en 15' correspond quant à lui à la pression et à la vitesse initiale minimales ; l'action de la gravité est beaucoup plus importante, si bien que le jet décrit une courbe et heurte la région du bord inférieur de la glace.

Il est important de noter que, conformément à l'invention, le balayage est obtenu sans mouvement du gicleur et sans phénomène de turbulence oscillante ou analogue au sein de celui-ci. Plus précisément, la direction initiale du jet est toujours la même. Il en résulte d'une part, que les pertes d'énergie dans le trajet du liquide en aval de la pompe sont minimisées, et, d'autre part, que la répartition judicieuse de la quantité de liquide en fonction des zones à nettoyer est conservée quelle que soit la pression de sortie de la pompe, qui détermine la hauteur du jet. Un lavage balayant d'une efficacité et d'une homogénéité optimales est ainsi obtenu.

En référence à la figure 8, le comportement du dispositif est en l'espèce le suivant.

Chaque impulsion de tension qui détermine une impulsion de pression 30, telle qu'illustrée sur la figure 8, comporte tout d'abord un front montant 301 relativement raide, pendant lequel le jet est engendré et monte instantanément jusqu'à la position de hauteur maximale (jet 15 sur la figure 2).

Suit un palier 302 pendant laquelle le jet conserve cette position puis la pression diminue dans un front descendant 303 relativement raide, mais par l'inertie engendrée dans la circulation de l'eau, la vitesse initiale du jet décroît plus lentement et provoque le balayage vertical du jet, dans le sens de la flèche 29 (figure 2) jusqu'au jet inférieur 15'.

Puis, la pression de refoulement de la pompe s'annulant, le jet disparaît jusqu'à l'impulsion suivante.

Sur la figure 8, les impulsions ont une largeur d'environ 0,5 seconde et sont espacées d'environ 2,7 secondes ; la pression de refoulement de la pompe varie entre 0 et $5.10^5$ Pascals.

Un cycle de nettoyage déclenché par l'interrupteur 28 comprend de préférence de 1 à 5 impulsions de nettoyage.

L'homme de l'art saura concevoir sans difficulté un circuit de commande en tension donnant les caractéristiques opératoires telles que décrites ci-dessus ou, en variante, tout autre cadencement approprié.

En particulier, un tel circuit, alimenté par l'accumulateur du véhicule, comprendra par exemple un circuit logique déterminant les caractéristiques souhaitées des impulsions (largeur, espacement, valeur de crête) et relié au moteur entraînant la pompe par l'intermédiaire d'un étage amplificateur.

En outre, on pourra envisager une commande de la pompe non pas par impulsions essentiellement rectangulaires, comme représenté, mais par exemple par un courant ondulatoire triangulaire, en dents de scie ou sinusoïdal.

Enfin, bien que l'emploi d'une pompe centrifuge associée à un moteur à courant continu soit particulièrement avantageux, du fait d'une bonne linéarité d'une part, entre le courant qui le traverse et le couple délivré par le moteur, et d'autre part, entre ce couple et la pression de refoulement de la pompe, il est bien entendu que d'autres dispositifs de pompage pourront être utilisés.

## Revendications

1. Dispositif pour laver la glace d'un projecteur, notamment d'un véhicule automobile, du type comprenant un réservoir (24) de liquide de lavage, un gicleur (14) dirigé vers la glace (12), une pompe (20) disposée entre le réservoir et le gicleur, et un moyen de commande (26, 28) de la pompe pour provoquer l'aspiration de liquide de lavage depuis le réservoir et son refoulement vers le gicleur, pour ainsi créer un jet de liquide de lavage heurtant la glace, caractérisé en ce que l'ouverture (143) de sortie du gicleur est conformée pour délivrer un jet de liquide en forme de lame de section essentiellement horizontale couvrant toute la largeur de la glace, et en ce que la pompe et son moyen de commande sont conçus pour faire varier la pression du liquide à l'entrée du gicleur, de telle sorte que le jet, par le jeu de sa vitesse initiale qui varie et de la force de gravité, effectue un mouvement de balayage de la glace dans le sens de sa hauteur.

2. Dispositif selon la revendication 1, caractérisé en ce que, pour atteindre un effet de lavage essentiellement uniforme sur toute la largeur du jet en forme de lame, ce dernier présente, dans une direction déterminée, une hauteur d'autant plus grande que la glace est éloignée du gicleur dans cette direction et inclinée par rapport à cette direction.

3. Dispositif selon la revendication 2, caractérisé en ce que la hauteur de l'ouverture de sortie (143) du gicleur détermine l'épaisseur du jet dans chaque direction et ladite ouverture présente une forme allongée horizontalement, avec une hauteur maximale à ses bords et minimale en son centre.

4. Dispositif selon la revendication 3, caractérisé en ce que l'ouverture de sortie (143) du gicleur (14) est délimitée en haut et en bas par deux faces convexes (144, 145).

5. Dispositif selon la revendication 3, caractérisé en ce que l'ouverture de sortie (143) du gicleur (14) est délimitée en haut et en bas par deux faces de profil en V (144', 145')

6. Dispositif selon l'une des revendications 1 à 5, caractérisé en ce que la pompe (20) est une pompe centrifuge entraînée par un moteur électrique à courant continu, la pression de sortie de la pompe étant essentiellement proportionnelle à l'intensité du courant qui traverse le moteur.

7. Dispositif selon la revendication 6, caractérisé en ce que le moyen de commande (26) est un circuit de commande en tension engendrant dans le moteur électrique une succession d'impulsions de courant (30).

8. Dispositif selon la revendication 7, caractérisé en ce que chaque impulsion (30) présente un front montant (301), un palier (302) et un front descendant, les fronts étant relativement raides.

9. Dispositif selon l'une des revendications 7 et 8, caractérisé en ce que chaque impulsion a une durée de l'ordre de 0,2 à 1 seconde, et en ce que deux impulsions successives sont séparées par une durée de l'ordre de 2 à 4 secondes.

10. Dispositif selon l'une des revendications 7 à 9, caractérisé en ce qu'un cycle de lavage comprend de 1 à 5 impulsions de courant, qui déterminent un nombre identique de balayages de la glace par le jet de liquide en forme de lame.

**Ansprüche**

1. Vorrichtung zum Waschen der Scheibe eines Scheinwerfers, insbesondere eines Kraftfahrzeugs, enthaltend einen Behälter (24) mit Waschflüssigkeit, eine der Scheibe (12) zugewandte Spritzdüse (14), eine zwischen dem Behälter und der Spritzdüse angeordnete Pumpe (20) und ein Mittel zur Steuerung (26, 28) der Pumpe, um das Ansaugen von Waschflüssigkeit aus dem Behälter und deren Beförderung zur Spritzdüse zu bewirken und somit einen Waschflüssigkeitsstrahl auf die Scheibe zu spritzen, **dadurch gekennzeichnet,** daß die Austrittsöffnung (143) der Spritzdüse so ausgebildet ist, daß ein lamellenförmiger Flüssigkeitsstrahl mit einem im wesentlichen horizontalen Querschnitt entsteht, der die gesamte Breite der Scheibe abdeckt, und daß die Pumpe und ihr Steuerungsmittel so konstruiert sind, daß der Flüssigkeitsdruck am Eintritt zur Spritzdüse in der Weise verändert werden kann, daß der Strahl aufgrund seiner unterschiedlichen Anfangsgeschwindigkeit und der Schwerkraft eine Bewegung zum Spülen der Scheibe in Richtung der Höhe ausführt.

2. Vorrichtung nach Anspruch 1, **dadurch gekennzeichnet,** daß der lamellenförmige Strahl, um eine im wesentlichen gleichmäßige Waschwirkung über die gesamte Breite zu erzielen, in einer bestimmten Richtung eine Höhe aufweist, die um so größer ist, als die Scheibe von der Spritzdüse in dieser Richtung entfernt ist, und die im Verhältnis zu dieser Richtung geneigt ist.

3. Vorrichtung nach Anspruch 1, **dadurch gekennzeichnet,** daß die Höhe der Austrittsöffnung (143) der Spritzdüse die Breite des Strahls in jeder Richtung bestimmt und daß die genannte Öffnung eine horizontal verlängerte Form aufweist, wobei die Höhe an den Rändern den größten Wert und in der Mitte den kleinsten Wert hat.

4. Vorrichtung nach Anspruch 3, **dadurch gekennzeichnet,** daß die Austrittsöffnung (143) der Spritzdüse (14) oben und unten durch zwei konvexe Flächen (144, 145) begrenzt ist.

5. Vorrichtung nach Anspruch 3, **dadurch gekennzeichnet,** daß die Austrittsöffnung (143) der Spritzdüse (14) oben und unten durch zwei Flächen mit V-Profil (144', 145') begrenzt ist.

6. Vorrichtung nach einem der Ansprüche 1 bis 5, **dadurch gekennzeichnet,** daß die Pumpe (20) eine durch einen Gleichstrom-Elektromotor angetriebene Kreiselpumpe ist, wobei der Förderdruck der Pumpe im wesentlichen proportional zur Stärke des den Motor durchfließenden Stroms ist.

7. Vorrichtung nach Anspruch 6, **dadurch gekennzeichnet,** daß das Steuerungsmittel (26) ein Steuerstromkreis ist, der im Elektromotor eine Folge von Stromimpulsen (30) auslöst.

8. Vorrichtung nach Anspruch 7, **dadurch gekennzeichnet,** daß jeder Impuls (30) eine ansteigende Flanke (301), einen waagerechten Teil (302) und eine absteigende Flanke aufweist, wobei die Flanken relativ starr sind.

9. Vorrichtung nach einem der Ansprüche 7 und 8, **dadurch gekennzeichnet**, daß jeder Impuls eine Dauer in der Größenordnung von 0,2 bis 1 sec hat und daß zwei aufeinanderfolgende Impulse durch eine Dauer in der Größenordnung von 2 bis 4 sec getrennt sind.

10. Vorrichtung nach einem der Ansprüche 7 bis 9, **dadurch gekennzeichnet**, daß ein Waschzyklus 1 bis 5 Stromimpulse umfaßt, die eine gleiche Anzahl Spülungen der Scheibe durch den lamellenförmigen Flüssigkeitsstrahl bestimmen.

## Claims

1. A device for washing the glass of a headlight, in particular of a motor vehicle, of the type comprising a reservoir (24) of washing liquid, a spray nozzle (14) directed towards the glass (12), a pump (20) disposed between the reservoir and the spray nozzle, and a pump control means (26, 28) for causing the suction of washing liquid from the reservoir and its delivery to the spray nozzle, in order to create in this way a jet of washing liquid striking the glass, characterized in that the outlet opening (143) of the spray nozzle is shaped for delivering a jet of liquid in the form of a sheet, having a substantially horizontal cross-section, which covers the entire width of the glass, and in that the pump and its control means are designed to vary the liquid pressure at the input to the spray nozzle in such a way that the jet, as a result of the range of its varying initial speed and the force of gravity, performs a movement which sweeps the glass in the direction of its height.

2. A device according to claim 1, characterized in that in order to obtain a substantially uniform washing effect over the whole width of the sheet-like jet, the latter comprises, in a predetermined direction, a height dimension which is greater the further away the glass is from the spray nozzle in this direction and the more it slopes relative to this direction.

3. A device according to claim 2, characterized in that the height dimension of the outlet opening (143) of the spray nozzle determines the thickness of the jet in each direction, and the said opening has a shape which is elongated horizontally, having a maximum height at its edges and a minimum height at its centre.

4. A device according to claim 3, characterized in that the outlet opening (143) of the spray nozzle (14) is delimited above and below by two convex faces (144, 145).

5. A device according to claim 3, characterized in that the outlet opening (143) of the spray nozzle (14) is delimited above and below by two faces (144', 145') having a V-shaped profile.

6. A device according to any one of claims 1 to 5, characterized in that the pump (20) is a centrifugal pump driven by a direct current electric motor, the outlet pressure of the pump being substantially proportional to the strength of the current which passes through the motor.

7. A device according to claim 6, characterized in that the control means (26) is a voltage control circuit producing a succession of current pulses (30) in the electric motor.

8. A device according to claim 7, characterized in that each pulse (30) comprises a rising front (301), a plateau (302) and a descending front, the fronts being relatively steep.

9. A device according to one of claims 7 and 8, characterized in that each pulse has a duration of the order of 0.2 to 1 seconds, and two successive pulses are separated by an interval of the order of 2 to 4 seconds.

10. A device according to any one of claims 7 to 9, characterized in that a washing cycle comprises from 1 to 5 current pulses which determine an identical number of movements in which the sheet-like jet sweeps the glass.

FIG_1

FIG_3

FIG_2

FIG_4

FIG_5

FIG-6

FIG-7

FIG-8